(19) Europäisches Patentamt

European Patent Office

Office européen des brevets

(11) Numéro de publication : **0 470 029 A1**

## (12) DEMANDE DE BREVET EUROPEEN

(21) Numéro de dépôt : **91470017.4**

(51) Int. Cl.⁵ : **B26B 5/00, A47J 43/25**

(22) Date de dépôt : **25.06.91**

(30) Priorité : **03.08.90 FR 9010096**

(43) Date de publication de la demande :
**05.02.92 Bulletin 92/06**

(84) Etats contractants désignés :
**AT BE CH DE ES GR IT LI NL**

(71) Demandeur : **Georges, Marcel**
**7 Route de Saffais, Barbonville**
**F-54360 Blainville sur L'EAU (FR)**

(72) Inventeur : **Georges, Marcel**
**7 Route de Saffais, Barbonville**
**F-54360 Blainville sur L'EAU (FR)**

(74) Mandataire : **Poupon, Michel**
**B.P. 421 3, rue Ferdinand Brunot**
**F-88011 Epinal Cédex (FR)**

(54) **Coupe-épices.**

(57)    Coupe-épices pour couper en dés les épices tels que ail, échalotte, persil du type comportant un porte-épice et un presse-épice, caractérisé en ce que :
— le coupe-épices comporte un plateau de glissement (1) avec un plan de glissement (1a) proprement dit en forme sensiblement de L ; les branches du L constituant le parcours du guide-épices, chaque branche du L étant bordée de chaque côté par un moyen de guidage (2) :
— le porte-épices comporte en partie basse des moyens de guidage complémentaires de ceux qui bordent les branches du L, et pouvant coopérer avec eux respectivement en suivant le premier parcours puis le deuxième parcours ;
— le plan de glissement étant équipé sur l'une des branches (6) du L d'une première série de fines lames verticales parallèles entre elles et à l'axe du parcours et sur l'autre branche (7) du L d'une deuxième série de fines lames verticales parallèles entre elles et à l'axe du parcours de sortie ainsi que d'un couteau dont le tranchant horizontal est perpendiculaire à l'axe de ladite branche, le couteau étant placé horizontalement après la deuxième série de lames dans le sens du déplacement du porte-épices ;
— le plateau de glissement comportant un trou d'évacuation (10) prévu sous le couteau.

EP 0 470 029 A1

Jouve, 18, rue Saint-Denis, 75001 PARIS

L'invention porte sur un dispositif coupe-épices pour couper en dés les épices telles que ail, échalotte, persil...

La difficulté réside dans le fait de découper des dés de très petite taille et de grosseur régulière.

On connaît déjà un dispositif de ce type décrit dans la demande française n° 2 512 662.

Le légume y est présenté verticalement sur des lames parallèles contenues dans un bac et séparées par des plaquettes. On enfonce l'épice jusqu'à contact avec les plaquettes puis on recommence après rotation de 90°. On fait ensuite glisser sur la table, un couteau horizontal tronçonne et les morceaux tombent dans un bac.

Par addition de plaquettes de formes diverses, on peut faire varier les dimensions des prismes obtenus.

Cet appareil comporte un certain nombre d'inconvénients notamment ; risque de coupure des doigts au niveau du couteau horizontal, absence de guidage de l'épice. Il y a rotation de l'épice et quasi impossibilité de couper celle-ci complétement.

Le dispositif conforme à l'invention palie ces inconvénients et permet de réaliser des dés réguliers de très petite taille.

La forme de réalisation préférée non limitatif de réalisation de l'invention est un coupe-épices pour couper en dés les épices tels que ail, échalotte, persil du type comportant un porte-épice et un presse-épice, caractérisé en ce que :

– le coupe-épices comporte un plateau de glissement avec un plan de glissement proprement dit en forme sensiblement de L ; les branches du L constituant le parcours du guide-épices, chaque branche du L étant bordée de chaque côté par un moyen de guidage ;

– le porte-épice comporte en partie basse des moyens de guidage complémentaires de ceux qui bordent les branches du L, et pouvant coopérer avec eux respectivement en suivant le premier parcours puis le deuxième parcours ;

– le plan de glissement étant équipé sur l'une des branches du L, d'une première série de fines lames verticales parallèles entre elles et à l'axe du parcours et sur l'autre branche du L d'une deuxième série de fines lames verticales parallèles entre elles et à l'axe du parcours de sortie ainsi que d'un couteau dont le tranchant horizontal est perpendiculaire à l'axe de ladite branche, le couteau étant placé horizontalement après la deuxième série de lames dans le sens du déplacement du porte-épices ;

– le plateau de glissement comportant un trou d'évacuation prévu sous le couteau.

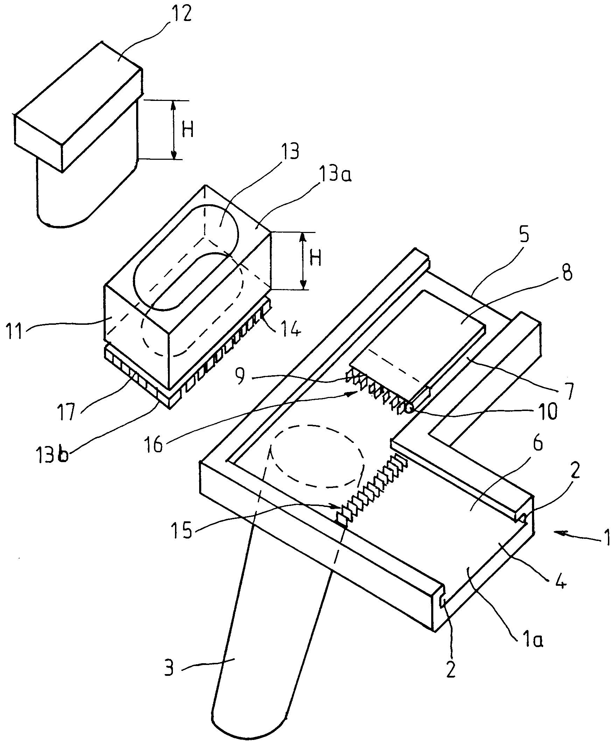

La description détaillée faite ci-après est relative à l'exemple de réalisation préféré non limitatif représenté sur la figure unique annexée.

Le coupe-épice représenté sur la figure se compose d'un plateau de glissement (1) en forme de L auquel est fixée une poignée de préhension (3) inclinée par rapport au plateau de glissement (1).

Le plateau de glissement (1) présente un plan de glissement proprement dit (1a) sur lequel glisse l'épice selon deux parcours (6,7) sensiblement perpendiculaires entre eux et formant les deux branches du L, avec des extrémités (4,5).

Chaque branche du L est bordée de chaque côté par une glissière (2) longitudinale, ou un autre moyen de guidage.

Le plateau de glissement est équipé, sur le parcours (6) d'une série de fines lames verticales parallèles (15) entre elles et à l'axe du parcours (6), ces lames sont situées à une distance suffisante pour ne pas gêner le déplacement du porte-épices.

Le plateau de glissement comporte également sur le parcours (7) une deuxième série de fines lames verticales parallèles (16) entre elles et à l'axe du parcours de sortie.

L'écartement, entre elles, des lames d'une même série définit la largeur ou la longeur des dés.

Après la deuxième série de lames dans le sens du parcours (7) se trouve un couteau (8) horizontal sensiblement rectangulaire de largeur au moins égale à la longueur de la deuxième série de lames, dont le tranchant (9) est perpendiculaire à l'axe du deuxième parcours, et dont la hauteur par rapport au plan de glissement définit la hauteur des dés.

Un trou d'évacuation (10) est prévu dans le plateau de glissement, sous le couteau (8).

Le coupe-épices se compose encore d'un guide-épices (11) et d'un presse-épices (12).

Le guide-épices présente sensiblement la forme d'un parallélépipède percé d'une cavité (13) de préférence oblongue, destinée à recevoir l'épice, et débouchant sur la face supérieure (13a) et sur la face inférieure (13b). Le guide-épices (11) est équipé en partie basse de quatre rainures de glissement (17) parallèles à la face inférieure (13b) destinées à coopérer avec les quatre glissières (2).

La face inférieure (13b) est équipée de rainures de coupe parallèles (14) longitudinales et transversales destinées au passage des lames des deux séries de lames (15,16).

Le presse-épices est un poussoir de forme habituelle dont la hauteur est compatible avec la hauteur (H) de la cavité (13).

Le fonctionnement de l'appareil se déroule comme suit :

– on place le porte-épices rempli à l'angle du L et on le déplace sur le parcours (6).

– les lames (15) réalisent une première série d'entailles parallèles entre elles et le guide-épices arrive en butée, en bout du parcours (6) et on revient à l'angle du L.

– on engage le presse-épices dans le deuxième parcours (7) sensiblement perpendiculaire au premier, et la deuxième série de lames réalise une deuxième série d'entailles sensiblement perpendiculaires au premières entailles.

– enfin le couteau (8) tronçonne les dés selon un plan parallèle au plan de glissement et le porte-épices arrive en butée en (5) ; les dés tombent par le trou d'évacuation et peuvent être recueillis dans un réservoir non représenté, puis le porte-épices revient à l'angle du L.

Le coupe-épices décrit ci-dessus est un exemple non limitatif de réalisation, diverses variantes de réalisation peuvent y être apportées, par exemple :

– inversion des parties mâles et femelles de l'ensemble -glissières (2), rainures de glissement (17)-

– variation de forme des lames qui ne sont pas obligatoirement rectangulaires, seul le bord d'attaque restant sensiblement, et au minimum, de longeur égale à la distance entre le couteau (8) et le plan de glissement (1a)

– variation de forme de la poignée par exemple pour des raisons ergonomiques ou esthétiques

– inversion des mouvements relatifs épice-lames.

Par ailleurs, le coupe-épices décrit est réalisé en matière plastique et les éléments tranchants (15,16,8) en acier inoxydable.

Cependant, d'autres matériaux peuvent être envisagés, par exemple pour le plan de cupe (1a) qui peut également être en acier inoxydable.

Enfin, on peut prévoir, pour les restaurants ou les collectivités par exemple, un dispositif d'entrainement mécanique du guide-épices pour automatiser son déplacement par rapport à des lames fixes, ou un dispositif d'entrainement des séries de lames pour les déplacer par rapport à un guide-épices fixe.

**Revendications**

1. Coupe-épices pour couper en dés les épices tels que ail, échalotte, persil du type comportant un porte-épice et un presse-épice, caractérisé en ce que :

– le coupe-épices comporte un plateau de glissement (1) avec un plan de glissement (1a) proprement dit en forme sensiblement de L ; les branches du L constituant le parcours du guide-épices, chaque branche du L étant bordée de chaque côté par un moyen de guidage (2) :

– le porte-épices comporte en partie basse des moyens de guidage complémentaires de ceux qui bordent les branches du L, et pouvant coopérer avec eux respectivement en suivant le premier parcours puis le deuxième parcours ;

– le plan de glissement étant équipé sur l'une des branches (6) du L d'une première série de fines lames verticales parallèles entre elles et à l'axe du parcours et sur l'autre branche (7) du L d'une deuxième série de fines lames verticales parallèles entre elles et à l'axe du parcours de sortie ainsi que d'un couteau dont le tranchant horizontal est perpendiculaire à l'axe de ladite branche, le couteau étant placé horizontalement après la deuxième série de lames dans le sens du déplacement du porte-épices ;

– le plateau de glissement comportant un trou d'évacuation (10) prévu sous le couteau.

2. Coupe-épices selon la revendication 1, caractérisé en ce qu'il comporte une poignée (3).

3. Coupe-épices selon l'une quelconque des revendications 1 et 2, caractérisé en ce qu'il est entrainé mécaniquement.

EP 0 470 029 A1

Office européen
des brevets

**RAPPORT DE RECHERCHE EUROPEENNE**

Numero de la demande

EP    91 47 0017

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5 ) |
|---|---|---|---|
| D A | FR-A-2 512 662 (P.O.PERUGINI)<br>* le document en entier *<br>--- | 1 | B26B5/00<br>A47J43/25 |
| A | GB-A-2 032 260 (KAM LEE METAL & PLASTIC FACTORY)<br>--- | | |
| A | US-A-2 511 909 (M.FORMAN)<br><br>----- | | |

**DOMAINES TECHNIQUES RECHERCHES (Int. Cl.5 )**

B26B
A47J

Le présent rapport a été établi pour toutes les revendications

| Lieu de la recherche | Date d'achèvement de la recherche | Examinateur |
|---|---|---|
| LA HAYE | 31 OCTOBRE 1991 | WOHLRAPP R.G. |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
........................................................................
& : membre de la même famille, document correspondant

EPO FORM 1503 03.82 (P0402)

6